# FASCICULE DE BREVET EUROPEEN

(11) **EP 1 793 148 B1**
(45) Date de publication et mention de la délivrance du brevet: **09.04.2008**
(21) Numéro de dépôt: 06291801.6
(22) Date de dépôt: 23.11.2006
(51) Int. Cl.: F16K 21/10, F16K 31/524

(54) **Robinet à fermeture temporisée**
Hahn mit zeitverzögerter Schliessung
Cock with time delayed closing

(30) Priorité: 30.11.2005 FR 0512101
(43) Date de publication de la demande: 06.06.2007
(73) Titulaire: Les Robinets Presto Société Anonyme, 92120 Montrouge (FR)
(72) Inventeur: Dutheil, Daniel, 17132 Meshers (FR)
(74) Mandataire: Vander-Heym, Serge Henri Marcel

(56) Documents cités:
- DE-A1- 4 210 242
- DE-A1- 19 935 167
- GB-A- 772 209
- US-A1- 3 144 853

## Description

La présente invention est relative à des perfectionnements aux robinets à fermeture temporisée.

Dans de tels robinets, la temporisation résulte du temps nécessaire au remplissage d'une chambre de temporisation dans laquelle l'eau sous pression pénètre par un orifice calibré en repoussant un piston rendu solidaire du clapet du robinet.

Pour ouvrir le robinet on repousse le piston ce qui a pour effet de soulever le clapet et de chasser l'eau contenue dans la chambre de temporisation.

Pour réduire l'effort nécessaire à l'ouverture du robinet, on utilise un dispositif permettant, lorsque l'ouverture du robinet est désirée, de mettre la chambre de temporisation à l'air libre. A cet effet, on utilise un clapet auxiliaire dont le siège communique avec la chambre de temporisation.

Dans l'un ou l'autre cas, l'ouverture du robinet s'effectue par une poussée axiale sur la tige du clapet.

Selon le type de robinet, l'utilisateur devra donc exercer une action de poussée selon une direction horizontale ou verticale (dans le cas notamment d'un robinet de chasse en équerre).

Le document DE 19935167 montre la tige du clapet en poussée axiale, donc l'utilisateur devra exercer une action de poussée selon une direction verticale.

L'expérience a montré que de tels robinets posaient des problèmes à certains utilisateurs, comme les jeunes enfants ou les personnes âgées en raison de la nature précise du geste à effectuer et des efforts à mettre en oeuvre. En effet, si l'utilisation d'un clapet de décharge permet de réduire les efforts à mettre en jeu il ne les annule pas.

La présente invention, qui remédie à ces inconvénients, est remarquable en ce que le poussoir, de commande de l'ouverture du robinet, est disposé sous une coiffe comportant une extension interne en contact avec ledit poussoir et susceptible de pivoter selon un axe s'étendant orthogonalement à l'axe du poussoir.

Selon l'invention, le corps du robinet comporte un chapeau, sur lequel la coiffe s'articule et est fixée, renfermant tous les composants du clapet auxiliaire et ceux nécessaires pour permettre de régler le volume d'eau délivré par le robinet.

D'autres caractéristiques ressortiront mieux par la description qui va suivre faite en se référant aux dessins annexés à titre d'exemple indicatif, seulement, sur lesquels :

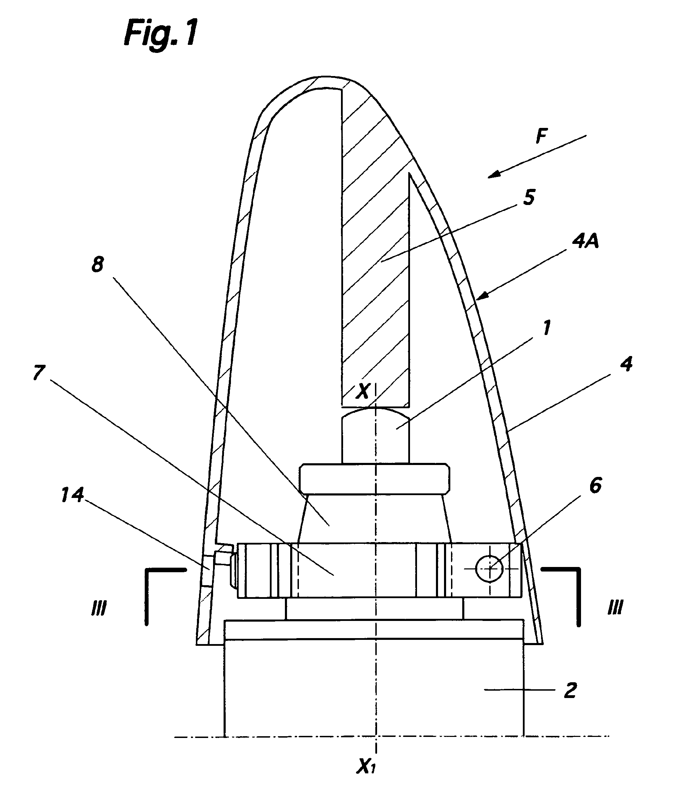

- la figure 1 est une vue en coupe verticale d'un robinet comportant le dispositif de l'invention ;
- la figure 2 est une vue analogue à la figure 1, montrant la position de la coiffe lors de l'ouverture du robinet ;
- la figure 3 est une vue en coupe effectuée selon la ligne III-III de la figure 1 ;
- la figure 4 est une vue analogue à celle 3 montrant la mise en place des organes permettant le pivotement de la coiffe ;
- la figure 5 est une vue en coupe verticale du chapeau ;
- la figure 6 est une vue analogue à celle 5 montrant une technique d'assemblage ;
- la figure 7 est une vue en coupe du robinet effectuée selon la ligne VII-VII de la figure 5 et s'étendant à la partie supérieure du corps.
- la figure 8 est la vue de gauche de la figure 7 ;
- la figure 9 est une vue en perspective limitée à la partie supérieure du corps.

En se reportant aux dessins et selon un mode de réalisation, on voit que 1 est un poussoir dont l'enfoncement, par un déplacement axial selon l'axe XX₁ est susceptible de provoquer l'ouverture du robinet schématisé par son corps 2.

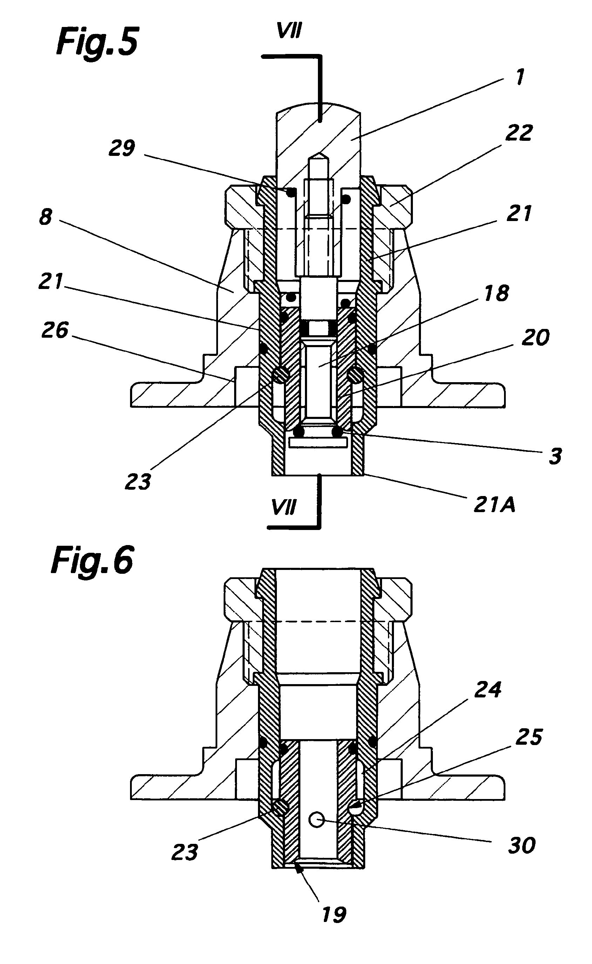

Selon le type de robinet, l'enfoncement du poussoir 1 détermine le soulèvement du clapet principal ou, comme dans l'exemple représenté, celui d'un clapet auxiliaire de décharge 3 (fig.5).

Selon l'invention, le poussoir 1 est recouvert par une coiffe 4 comportant une extension 5, interne, en contact avec ledit poussoir, ladite coiffe étant susceptible de pivoter autour d'un axe 6 s'étendant orthogonalement à celui XX₁.

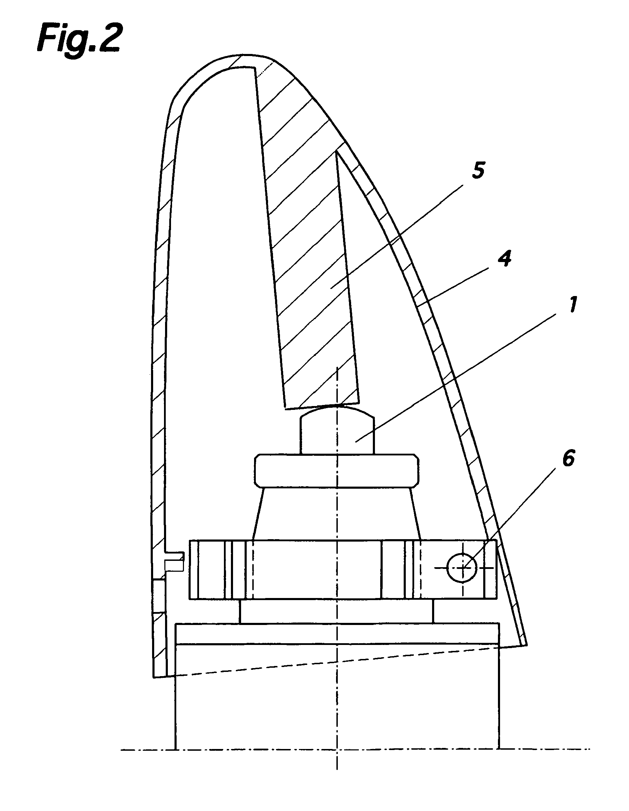

Lorsqu'un usager exerce une pression selon la flèche F, la coiffe pivote dans le sens de la poussée, ce qui a pour effet, comme montré sur la figure 2, de provoquer l'enfoncement du poussoir. Lorsque l'action cesse, la coiffe pivote en sens inverse sous l'action du ressort de rappel usuel du poussoir.

La fixation et l'articulation de la coiffe sur le robinet sont obtenues par une bague 7 pouvant être fixée sur le chapeau 8 obturant la partie supérieure du corps 2 du robinet.

L'axe d'articulation 6 est matérialisé par deux tourillons 9, logés dans la bague 7 et dont une extrémité de chacun peut s'étendre dans un logement 10 de la coiffe.

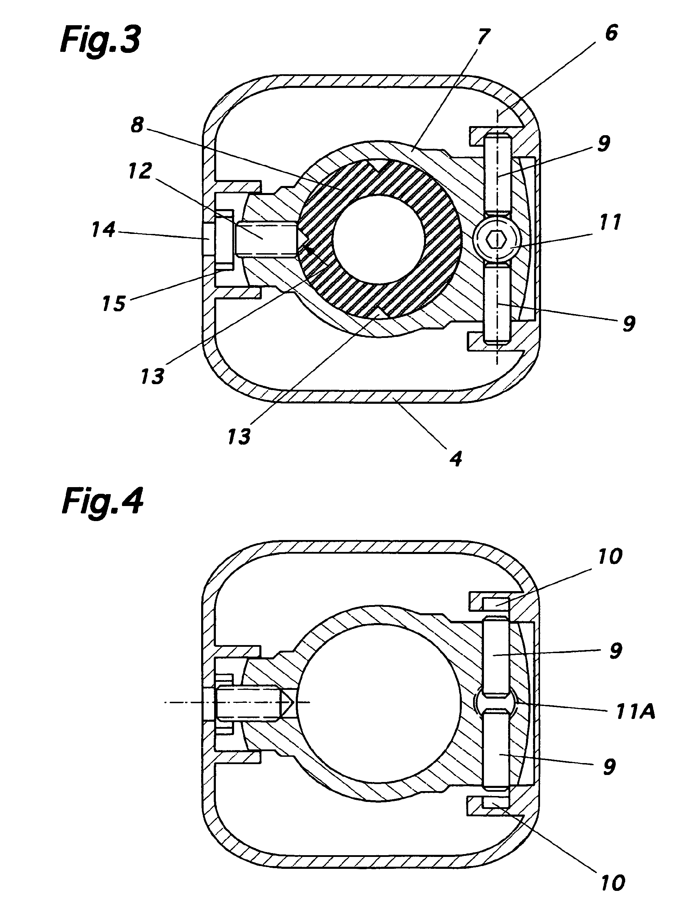

Comme cela ressort de la figure 4, la longueur totale des deux tourillons est inférieure à la distance séparant les logements 10 et l'alésage de réception desdits tourillons.

Lors du montage, les deux tourillons sont dans la position représentée sur la figure 4 et la solidarisation de la coiffe 4 et de la bague 7 est obtenue en repoussant les deux tourillons, cette action résultant de la mise en place d'une vis 11, à bout conique, dans un filetage 11 A, de ladite bague, dont l'axe s'étend perpendiculairement à celui 6.

La fixation de la coiffe est réalisée par une vis de pression 12, s'engageant dans un logement 13 du chapeau 8 et pouvant être manoeuvrée grâce à un orifice 14 prévu sur la coiffe et débouchant sur la face de cette dernière disposée en regard de la cloison de support du robinet. De ce fait, l'organe de fixation de la coiffe est invisible pour l'utilisateur et cela constitue une protection contre le vandalisme.

Au-dessus de l'orifice 14 est disposé un berceau 15 permettant, lors de la fixation de la coiffe, d'aligner l'axe dudit orifice et celui de la vis 12.

Selon un mode de réalisation, le chapeau 8 comporte trois logements 13, ce qui permet de présenter la face active 4A de la coiffe toujours face à l'utilisateur, que l'arrivée d'eau d'alimentation provienne du mur, de la gauche ou de la droite.

Selon une autre caractéristique de l'invention, le bouchon porte le clapet de décharge 3 et un dispositif permettant de régler la quantité d'eau délivrée. Ce réglage est obtenu en limitant la course du piston 16, usuel, portant le clapet principal.

En effet, si par une butée, on réduit la course du piston 16, on réduit le temps de remplissage de la chambre de temporisation 17 et, par suite, le volume d'eau délivré durant ce temps et inversement.

Sont solidaires du chapeau 8 :
- le clapet de décharge 3 se prolongeant par une tige 18 vissée dans le poussoir 1 ;
- le siège 19 du clapet 3 situé à la partie inférieure d'une douille 20, ledit siège étant immobilisé axialement par rapport au chapeau ;
- un fourreau 21, entourant les organes précités, mobile axialement par rapport au chapeau.

Lorsque le chapeau 8 est fixé sur le corps 2, l'extrémité inférieure 21 A du fourreau s'étend de façon étanche dans la chambre 17.

A la partie supérieure du fourreau 21 est clipsée une pièce 22, pouvant donc pivoter librement sur ledit fourreau, ladite pièce étant vissée dans le chapeau 8. En vissant ou en dévissant la pièce 22, ou organe d'entraînement, on déplace axialement le fourreau qui comporte, par ailleurs, des moyens pour l'immobiliser en rotation.

Il est à noter que la coiffe 4, qui recouvre l'ensemble, s'oppose à la manoeuvre, par une personne non autorisée, de l'organe de réglage 22.

L'immobilisation en rotation du fourreau 21 et celle axiale de la douille 20 sont obtenues par, au moins, une clavette 23, dite entre cuir et chair, traversant ces deux organes simultanément et s'étendant au-delà dudit fourreau. A cet effet, le fourreau présente une ouverture oblongue 24 et la douille 20 un évidement 25 cylindrique.

Selon un mode de réalisation, la chambre de temporisation est formée par un fût 27 et le piston 16, l'ensemble étant disposé dans le corps 2, selon la technique dite de la cartouche amovible. Cette cartouche est immobilisée en rotation dans le corps.

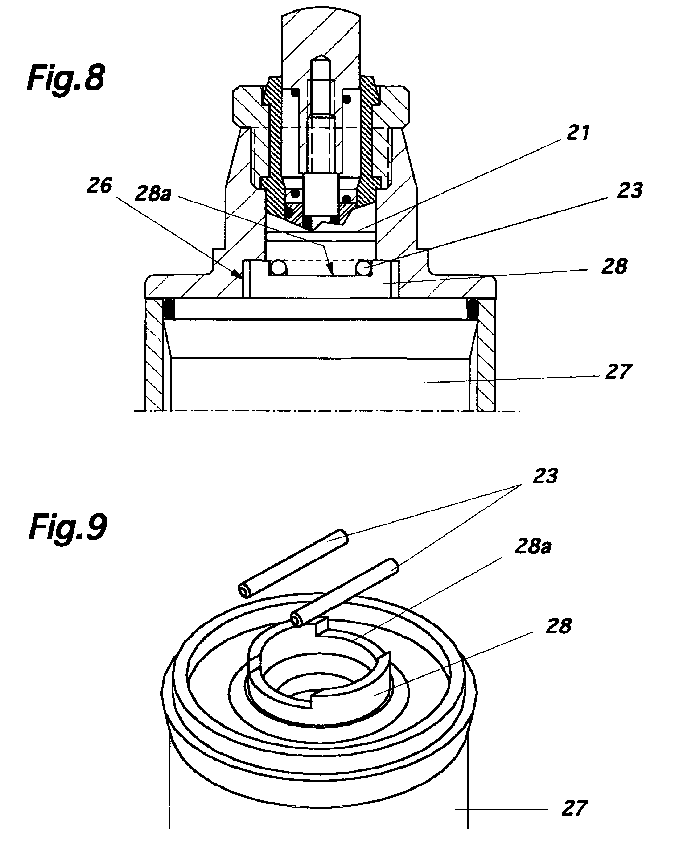

La partie supérieure du fût 27 présente un embout 28 comportant une encoche 28a dans laquelle s'insère la clavette 23, lorsque le chapeau 8 est fixé sur le corps 2. Cet embout, maintient la clavette 23 appliquée contre le fond du logement 26 ce qui assure le maintien du poussoir 1 à une position fixe par rapport au robinet. Cet embout a aussi pour fonction de s'opposer à la rotation du fourreau 21 comme cela ressort, notamment, des figures 8 et 9. Dans l'exemple représenté, on utilise deux clavettes et la largeur de l'encoche 28a est prévue en conséquence.

La figure 6 illustre le montage de la clavette 23 et, d'une façon générale, l'assemblage des pièces internes.

Après avoir monté l'organe 22 sur le fourreau 21 (celui-ci présentant à sa partie supérieure au moins une fente diamétrale pour permettre le « clipsage »), on visse à fond ledit organe 22 dans le couvercle pour le placer dans la position de la figure 6, position où il est possible d'engager les clavettes. Il suffit ensuite d'engager la tige 18, comportant le clapet, dans la douille 20, de placer le ressort de rappel usuel 29 et de visser le poussoir 1. Finalement, on repousse l'ensemble 1-3-18 contre le fond du logement 26, si la clavette comporte une tête de blocage, dans le cas contraire cette opération aura lieu lors de la fixation du chapeau sous l'effet de l'embout 28.

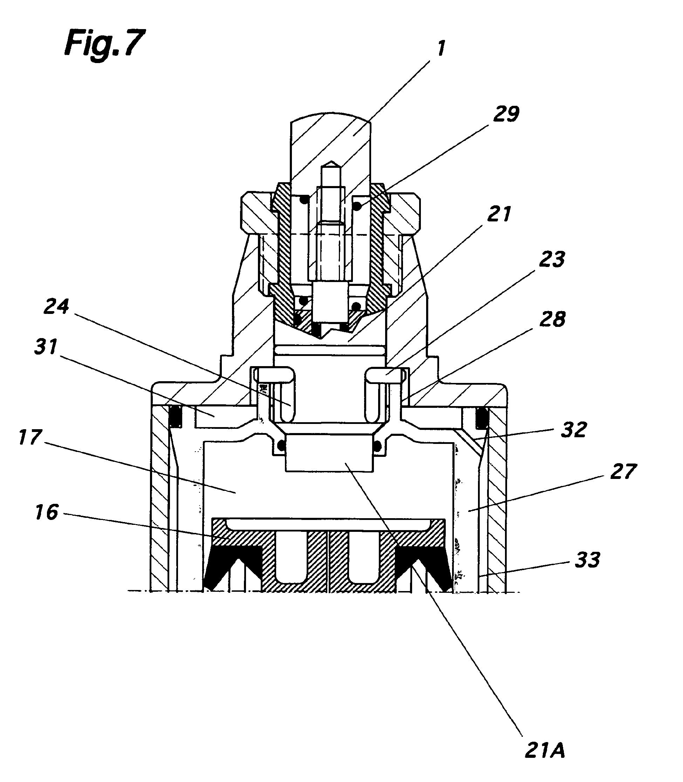

L'enfoncement du poussoir 1 provoque le soulèvement du clapet de décharge et l'eau contenue dans la chambre 17 traverse le siège 19 et pénètre dans l'espace annulaire ménagé entre la tige 18 et la douille 20. La douille 20 présente des orifices radiaux, tel que celui 30 de la figure 7 de sorte que l'eau pénètre dans le logement 26 (par les ouvertures 24 oblongues et encoche 28a) et, dans l'espace 31 ménagé entre la face supérieure du fût 27 et celle inférieure du chapeau 8. Un orifice 32 prévu dans le fût 27 permet d'envoyer l'eau de décharge dans l'espace annulaire 33 ménagé entre ledit fût et le corps 2, ledit espace communiquant avec la sortie d'eau.

## Revendications

1. Robinet à fermeture temporisée comportant un poussoir dont le déplacement axial est susceptible de soulever un clapet, **caractérisé en ce que** le poussoir (1) est disposé sous une coiffe (4), comportant une extension interne (5) en contact avec ledit poussoir, susceptible de pivoter, sous l'action d'un usager, selon un axe (6) s'étendant orthogonalement à l'axe dudit clapet.

2. Robinet selon la revendication 1, **caractérisé en ce que** le corps du robinet comporte un chapeau (8) sur lequel est fixée la coiffe (4), ledit chapeau renfermant tous les organes nécessaires à la réalisation d'un clapet de décharge et ceux permettant de faire varier le temps de remplissage de la chambre de temporisation.

3. Robinet selon l'une des revendications 1 et 2, **caractérisé en ce que** la coiffe est articulée sur une bague (7) pouvant être montée et fixée sur le chapeau (8).

4. Robinet selon l'une des revendications 1 à 3, **caractérisé en ce que** la fixation de la bague (7) est assurée par une vis (12) dont l'extrémité est susceptible de pénétrer dans l'un des logements (13) prévus sur le chapeau (8), la coiffe (4) présentant, a cet effet, un orifice (14) d'accès à ladite vis et un berceau (15) permettant d'aligner, lors du montage, l'axe de l'orifice et celui de la vis.

5. Robinet selon l'une des revendications 1 à 4, **caractérisé en ce que**, le chapeau (8) renferme un fourreau (21), mobile axialement à l'intérieur duquel est disposée une douille (20), immobilisée axialement, formant le siège du clapet de décharge (3), ladite douille étant reliée au poussoir (1) par une tige (18) avec interposition d'un ressort de rappel (29).

6. Robinet selon la revendication 5, **caractérisé en ce que** le fourreau et la douille sont traversés par, au moins, une clavette (23), dite entre cuir et chair, dont les extrémités s'étendent au-delà du fourreau, ledit fourreau comportant une ouverture oblongue (24) et ladite douille présentant un évidemment cylindrique (25).

7. Robinet selon la revendication 6, **caractérisé en ce que** la clavette (23) est immobilisée en translation et en rotation par l'entremise d'un embout (28) encoché, prévu à la partie supérieure du fût (27) de la cartouche de temporisation.

8. Robinet selon l'une quelconque des revendications 1 à 7, **caractérisé en ce que** le fourreau est lié en translation à un organe de réglage (22) vissé dans le chapeau à sa partie supérieure.

9. Robinet selon l'une quelconque des revendications 1 à 8, **caractérisé en ce que**, lorsque le chapeau est fixé sur le corps, l'extrémité inférieure du fourreau débouche dans la chambre de temporisation (17) et limite la course du piston(16).

## Claims

1. A cock with a time-delayed closing including a lifter, the axial motion of which is likely to lift a valve, **characterized in that** the lifter (1) is positioned under a retainer (4), including an inner extension (5) in contact with said lifter, likely to pivot under the action of a user, along an axis (6) extending perpendicularly to the axis of said valve.

2. A cock according to claim 1, **characterized in that** the cock body includes a bonnet (8) on which the retainer (4) is fixed, said bonnet including all the elements required for making a relief valve and those making it possible to vary the filling time of the delaying chamber.

3. A cock according to any one of claims 1 and 2, **characterized in that** the retainer is hinged on a ring (7) which can be mounted and fixed on the bonnet (8).

4. A cock according to any one of claims 1 to 3, **characterized in that** the ring (7) is fixed by means of a screw (12) the end of which is likely to engage in one of the housing (13) provided on the bonnet (8), the retainer (4) having, for this purpose, a hole (14) giving access to said screw and a cradle (15) making it possible to align, during mounting operations, the axis of the hole and that of the screw.

5. A cock according to any one of claims 1 to 4, **characterized in that** the bonnet (8) includes an axially movable sleeve (21), inside which is positioned an axially stationary socket (20) which forms the seat of the relief valve (3), said socket being connected to the lifter (1) by means of a rod (18), with a return spring (29) being interposed.

6. A cock according to claim 5, **characterized in that** the sleeve and the socket are crossed by at least a key (23), so called an interlaid key, the ends of which extend beyond the sleeve, said sleeve including an oblong opening (24) and said socket having a cylindrical recess (25).

7. A cock according to claim 6, **characterized in that** the key (23) is fixed, in translation and in rotation, through a notched tip (28), provided at the upper part of the stem (27) of the delaying cartridge.

8. A cock according to any one of claims 1 to 7, **characterized in that** the sleeve is connected, in translation, to an adjusting member (22), screwed in the bonnet, at its upper part.

9. A cock according to any one of claims 1 to 8, **characterized in that**, when the bonnet is fixed on the body, the lower end of the sleeve opens into the delaying chamber (17) and limits the travel of the piston (16).

## Patentansprüche

1. Hahn mit verzögerter Schließung mit einem Stößel, mit dessen axialer Bewegung eine Klappe angehoben werden kann, **dadurch gekennzeichnet, daß** der Stößel (1) unter einer Kappe (4) angeordnet ist, die eine innere Erweiterung (5) in Berührung mit dem besagten Stößel umfaßt, der unter Einwirkung eines Benutzers gemäß einer Achse (6) schwenken kann, die sich orthogonal zur Achse der besagten Klappe erstreckt.

2. Hahn nach Anspruch 1, **dadurch gekennzeichnet, daß** der Körper des Hahns einen Aufsatz (8) umfaßt, auf dem die Kappe (4) befestigt ist, wobei der besagte Aufsatz alle Organe umfaßt, die für die Ausführung eines Ausflußventils notwendig sind, sowie diejenigen, mit denen die Befüllungszeit der Verzögerungskammer variiert werden kann.

3. Hahn nach einem der vorstehenden Ansprüche 1 und 2, **dadurch gekennzeichnet, daß** die Kappe gelenkig auf einem Ring (7) befestigt ist, der auf dem Aufsatz (8) montiert und befestigt werden kann.

4. Hahn nach einem der vorstehenden Ansprüche 1 bis 3, **dadurch gekennzeichnet, daß** die Befestigung des Rings (7) durch eine Schraube (12) gesichert ist, deren Ende in eine der Aufnahmen (13) eindringen kann, die auf dem Aufsatz (8) vorgesehen sind, wobei die Kappe (4) hierfür eine Öffnung (14) für den Zugang zur besagten Schraube und einen Träger (15) aufweist, damit bei der Montage die Achse der Öffnung und diejenige der Schraube ausgefluchtet werden können.

5. Hahn nach einem der vorstehenden Ansprüche 1 bis 4, **dadurch gekennzeichnet, daß** der Aufsatz (8) eine axial mobile Hülse (21) umschließt, in deren Innern eine axial feststehende Hülse (20) angeordnet ist, die den Sitz des Ausflußventils (3) bildet, wobei die besagte Hülse durch eine Stange (18) mit einer dazwischen montierten Rückholfeder (29) mit dem Stößel (1) verbunden ist.

6. Hahn nach Anspruch 5, **dadurch gekennzeichnet, daß** die Hülle und die Hülse von mindestens einem Keil (23) durchquert werden, sozusagen zwischen Außenhaut und Innenteil, dessen Enden sich über die Hülle hinaus erstrecken, wobei die besagte Hülle eine längliche Öffnung (24) umfaßt und die besagte Hülse eine zylinderförmige Ausnehmung (25) aufweist.

7. Hahn nach Anspruch 6, **dadurch gekennzeichnet, daß** der Keil (23) bei Quer- und Drehbewegung durch Einwirkung eines Endstücks (28) mit Kerben gesperrt wird, das am oberen Teil des Schafts (27) der Verzögerungspackung vorgesehen ist.

8. Hahn nach einem beliebigen der vorstehenden Ansprüche 1 bis 7, **dadurch gekennzeichnet, daß** die Hülle in Translation mit einem Regelorgan (22) verbunden ist, das im oberen Teil des Aufsatzes eingeschraubt ist.

9. Hahn nach einem beliebigen der vorstehenden Ansprüche 1 bis 8, **dadurch gekennzeichnet, daß**, wenn der Aufsatz auf dem Körper befestigt ist, das untere
